# EUROPEAN PATENT SPECIFICATION

(11) **EP 0 603 168 B1**
(45) Date of publication and mention of the grant of the patent: **03.02.1999**
(21) Application number: 94200371.6
(22) Date of filing: 28.10.1988
(51) Int. Cl.: G11B 20/14, G11B 7/013

(54) **Method and system for recording digital data**
Methode und System zur Aufzeichnung von digitalen Daten
Meth de et système d'enregistrement des données numériques

(30) Priority: 30.10.1987 JP 275079/87
(43) Date of publication of application: 22.06.1994
(62) Divisional of application: 88310195.8
(73) Proprietor: CANON KABUSHIKI KAISHA, Tokyo (JP)
(72) Inventor: Sato, Hideaki, c/o Canon Kabushiki Kaisha, Ohta-ku, Tokyo (JP)
(74) Representative: Beresford, Keith Denis Lewis

(56) References cited:
- EP-A- 0 213 623
- PATENT ABSTRACTS OF JAPAN vol. 9, no. 312 (P-411) 7 December 1985 & JP-A-60 140 544 (FUJITSU K.K.) 25 July 1985
- TOPICAL MEETING ON OPTICAL DATA STORAGE. TECHNICAL DIGEST SERIES VOL.10 (PAPERS IN SUMMARY FORM ONLY RECEIVED), STATELINE, NV, USA, 11-13 MARCH 1987, ISBN 0-936659-45-9, 1987, WASHINGTON, DC, USA, OPT. SOC. AMERICA, USA, PAGE(S) 106 - 110 Howe D G et al 'Digital optical recording-the case for coding'
- WIRELESS WORLD, APRIL 1982, UK, VOL. 88, NR. 1555, PAGE(S) 77 - 80, ISSN 0043-6062 Watkinson J R 'Disc drives'
- IBM TECHNICAL DISCLOSURE BULLETIN, MAY 1985, USA, VOL. 27, NR. 12, PAGE(S) 7025 - 7026, ISSN 0018-8689 'Write-time compensation for 2,7 code'

## Description

The present invention relates to a recording system when digital data is recorded onto a recording medium.

As a system for encoding data to be recorded and recording, a system in which input data series is converted into Run Length Limited code (hereinafter, this code is referred to as "RLL code") series and recorded in accordance with the NRZL (NRZ) rule is known.

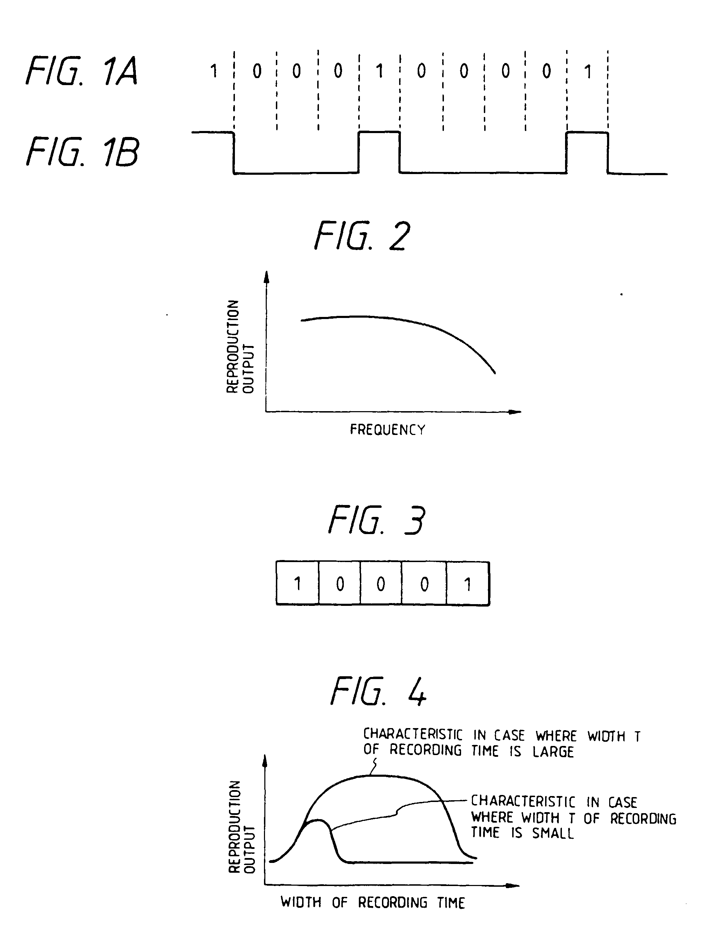

The NRZL rule means a system in which, for instance, when the RLL coded data is as shown in Fig. 1A, this data is converted into a signal as shown in Fig. 1B.

In the case of decoding, an interval between code 1 and code 1, that is, data between marks is decoded.

A recording medium generally has a reproducing characteristic such that a response of a reproduction output decreases at a high frequency as shown in Fig. 2. Therefore, when a pulse width of recording signal is narrow, the response decreases.

The RLL codes are generally expressed as d, k, m, and n codes.

In this case, m denotes the number of bits constituting one block of the input data series and n indicates the number of bits of one block of the input data series after completion of the conversion in the corresponding RLL code. On the other hand, d represents the minimum number of continuous code bits "0" which is permitted in the RLL codes. Namely, when d ≧ 1, the code bit "1" does not continue. k indicates the maximum number of continuous code bits "0" which is permitted in the RLL code.

In the RLL codes, the case where the values of d and k, particularly, the value of d is relatively large will now be considered. As an example, the case of d = 3 is shown in Fig. 3.

In this case, when a light source for recording is flickered and recorded on an optical recording medium in accordance with the NRZL rule, particularly, in the case of a high density and a short flickering time of the light source, there could occur such a situation that an enough energy is not given to the recording medium and the optical recording is not satisfactorily performed (that is, the response lags). This is because the surface of the medium is changed by the heat, thereby recording.

Fig. 4 shows examples of a change in reproduction output in the case where a width T of recording time is large and a reproduction output in the case where it is small.

Therefore, in the conventional NRZL recording of the RLL codes, there are problems such that when the lighting time of the light source is short, the reproduction output of an enough high level cannot be obtained and it is difficult to reduce errors of information. In other words, there is a problem such that in the case of the same error rate, it is difficult to improve the recording density.

Patent Abstracts of Japan, Vol 9, No 312 (P-411) 2035, 07.12.85, discloses an optical recording arrangement in which the pulsewidth of an original signal representing a write hole is widened in order to overcome the problem that due to the threshold level the write holes on an optical disc are reduced. Topical Meeting on Optical Data Storage, Stateline, Nevada, 11-13 March 1987, pages 106-110, Optical Society of America, Washington DC, USA; D G Howe et al "Digital Optical Recording - The Case for Coding", discloses a digital optical recording arrangement, utilising a Run Length Limited (RLL) modulation code in which the pulsewidth corresponding to code "1" in the digital data input is converted into a wider second pulsewidth in order to overcome the problem referred to earlier in connection with the arrangement disclosed in Patent Abstracts of Japan, Vol 9, No. 312.

According to the present invention there is provided
a digital data recording method comprising the steps of:
encoding digital data as a recording code comprising recording bits and non-recording bits such that the minimum run length of the non-recording bits is limited to a predetermined number of bits d;
generating a recording waveform in which each of the recording bits is represented by a recording pulse of length T and each non-recording bit by a non-recording pulse of length T; and
recording the recording code on a recording medium according to the recording waveform such that recording bits are represented by marks and non-recording bits by spaces between marks;
characterised in that the digital data is encoded such that recording bits do not occur twice without an intervening non-recording bit, and by the method including the further step of converting the recording waveform before the recording step by extending the duration of each of the recording pulses such that the extended length of each of the recording pulses is${\text{T}}_{\text{1}} \text{= (} \text{d} \text{+1)} \text{x} \frac{\text{T}}{\text{2}}$

In the accompanying drawings,
Figs. 1A and 1B are diagrams showing RLL codes in accordance with the NRZL rule;
Fig. 2 is a diagram showing a general frequency characteristic of a reproduction output in the optical recording;
Fig. 3 is a diagram showing an example of RLL codes;
Fig. 4 is a diagram showing a reproduction output in the case where a width T of recording time is large and a reproduction output in the case where it is small;
Fig. 5 is a block diagram showing a one shot multivibrator.
Figs. 6A and 6B are diagrams showing a signal in the case where the time width of code 1 is converted;
Figs. 7A and 7B are diagrams showing a signal in the case where the time width of code 1 is converted;
Fig. 8A is a diagram showing a signal which is recorded onto a recording medium;
Fig. 8B is a diagram showing an analog reproduction signal of the signal shown in Figure 8A recorded on the recording medium; and Fig. 8C is a diagram showing a binarized signal of the analog reproduction signal as shown in Figure 8B.

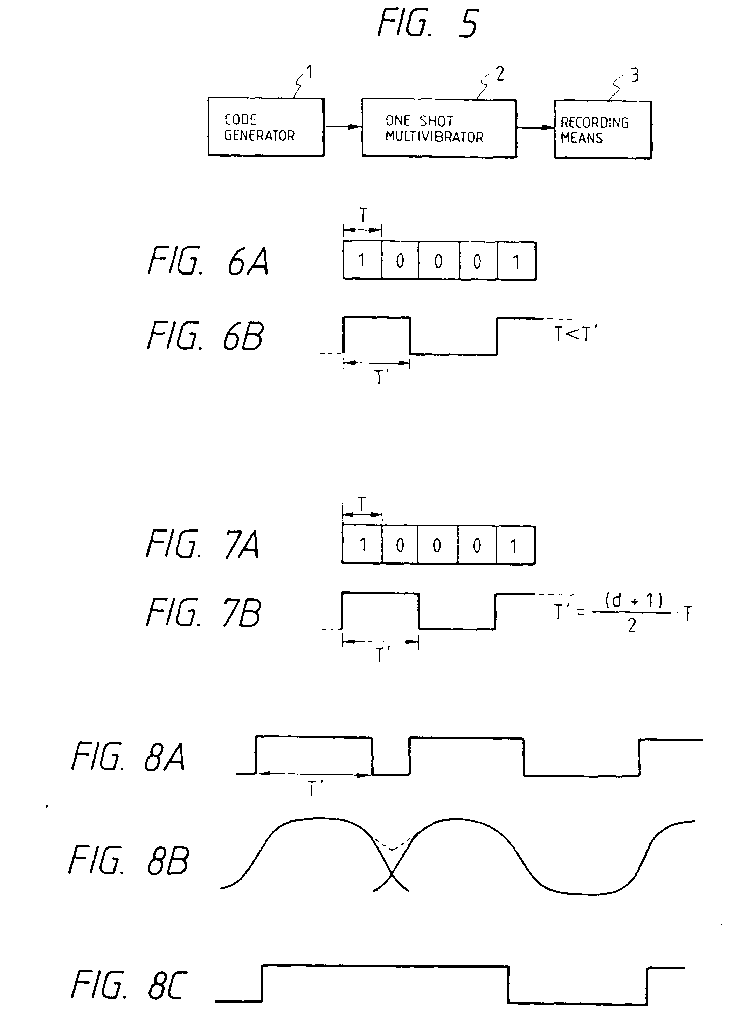

Fig. 5 is a block diagram showing a code generator 1 for generating RLL codes and outputs the RLL codes corresponding to input data, a one shot multivibrator 2 serving as means for converting a time width T corresponding to code 1 in the RLL codes into a time width T' longer than the time width T and outputting, and recording means 3 for recording information onto a recording medium in accordance with the code having the time width T' converted. A magnetooptic disk apparatus for recording information onto a disk by irradiating a laser beam may be used as the recording means 3.

Figs. 6A and 6B are explanatory diagrams of the above arrangement.

It is now assumed that the time width of the code 1 bit in the RLL codes is T and the codes shown in Fig. 6A are output from the code generator 1. The one shot multivibrator 2 converts the time width T of code 1 in the RLL codes into T' and outputs. In this case, the time width T' is longer than the time width T.

As will be seen from Fig. 4, the output of the code having the time width T' is larger than the output of the code having the time width T. As shown in Fig. 6B, an interval between code 1 in Fig. 6A and next code 1 is equal to an interval between the leading edge of the time width T' and the leading edge of the code of the next time width T'. Therefore, even if the time width of code 1 is changed by the multivibrator 2, the content of the information in the RLL codes does not change.

Therefore, in the case of using an optical disk apparatus or a magnetooptic disk apparatus as the recording means, a sufficiently larger energy than that when a laser beam is irradiated onto the disk at the time width T is given to the disk, so that the recorded data of code 1 can be more precisely read out.

Although the one shot multivibrator 2 has been shown in Fig. 5 as means for converting the time width T into the time width T', it can be also converted by another means.

For example, it is sufficient to construct in a manner such that when code 1 is input, the counting is started in response to the leading edge by using a counter for counting clock pulses and a high level signal is output until the pulses of the number corresponding to the time width T' are counted. On the other hand, it is also possible to start the counting in response to a trailing edge of code 1 and to count the pulses of the number corresponding to only (T' - T).

Codes shown in Fig. 7A are similar to those shown in Fig. 6A. In the waveform shown in Fig. 7B, in the case of converting the time width T into T' when d = 3,$\text{T' = (d + 1) x T/2}$

As the time width T' increases, code 1 can be easily discriminated but the width of code 0 is reduced. Therefore, there is a possibility such that the number of errors increases in the portion corresponding to code 0 due to the interference between codes.

Namely, in the case where data shown in Fig. 8A was recorded, when this recorded data is read out of a recording medium, it shows such an analog waveform as shown in Fig. 8B. When the width of code 0 decreases, the edge slope portion of code 1 and the edge slope portion of the analog waveform corresponding to code 1 overlap, so that there occurs a case where the portion which should inherently be 0 is erroneously discriminated as 1 (Fig. 8C).

In general, in one RLL code, the density of code 1 becomes maximum in the case where d codes 0 are arranged between code 1 and the next code 1. In this case, since the width of code 0 becomes minimum, a data error most easily occurs. Therefore, in such a case, by making the widths of codes 1 and 0 equal (duty factor 50%), the error rates of codes 1 and 0 can be equally reduced. Accordingly, it is desirable to set the time width T' as shown in the equation (1).

In the above embodiment, the duty factor has been set to 50% only when d codes 0 are arranged between code 1 and the next code 1.

As mentioned above, in the system for recording the RLL codes in accordance with the NRZL rule, the recording error rate can be certainly reduced. In other words, there is an advantage such that with the same error rate, the recording density can be certainly improved.

Table 1 shows an example of encoding into the RLL codes. This example relates to the case where d = 5 and n = 6. The left side in the table denotes the original data and the right side indicates the RLL code.

**TABLE 1**

| | |
|---|---|
| (00) | 100000 |
| (0100) | 010000000000 |
| (0101) | 001000000000 |
| (0110) | 000100000000 |
| (0111) | 000010000000 |
| (1000) | 000001000000 |
| (1001) | 000000100000 |
| (101000) | 010000010000000000 |
| (101001) | 010000001000000000 |
| (101010) | 010000000100000000 |
| (101011) | 010000000010000000 |
| (101100) | 010000000001000000 |
| (101101) | 001000001000000000 |
| (101110) | 001000000100000000 |
| (101111) | 001000000010000000 |
| (110000) | 001000000001000000 |
| (110001) | 000100000100000000 |
| (110010) | 000100000010000000 |
| (110011) | 000100000001000000 |
| (110100) | 000010000010000000 |
| (110101) | 000010000001000000 |
| (110110) | 000001000001000000 |

## Claims

1. A digital data recording method comprising the steps of:
encoding digital data as a recording code comprising recording bits and non-recording bits such that the minimum run length of the non-recording bits is limited to a predetermined number of bits d;
generating a recording waveform in which each of the recording bits is represented by a recording pulse of length T and each non-recording bit by a non-recording pulse of length T; and
recording the recording code on a recording medium according to the recording waveform such that recording bits are represented by marks and non-recording bits by spaces between marks;
characterised in that the digital data is encoded such that recording bits do not occur twice without an intervening non-recording bit, and by the method including the further step of converting the recording waveform before the recording step by extending the duration of each of the recording pulses such that the extended length of each of the recording pulses is${\text{T}}_{\text{1}} \text{= (} \text{d} \text{+1)} \text{x} \frac{\text{T}}{\text{2}}$

2. A method as claimed in claim 1, characterised in that said encoding system is a Run Lenght Limited encoding system.

3. A method as claimed in claim 2, characterised in that in said recording step, the Run Length Limited encoded digital data is recorded in accordance with an NRZ (Non Return to Zero) rule.

4. A method as claimed in any one of claims 1-3, characterised in that in said recording step, said digital data is recorded by irradiating a light onto said recording medium.

5. A method as claimed in claim 4, characterised in that in said recording step, the light is irradiated by pulses of the number of said codes "1".

6. A digital data recording system comprising;
encoding means operable to encode digital data as a recording code comprising recording bits and non-recording bits such that the minimum run length of the non-recording bits is limited to a predetermined number of bits d;
generating means operable to generate a recording waveform in which each of the recording bits is represented by a recording pulse of length T and each non-recording bit by a non-recording pulse of length T; and
recording means operable to record the recording code on a recording medium according to the recording waveform such that recording bits are represented by marks and non-recording bits by spaces between marks;
characterised in that the encoding means encodes the digital data such that recording bits do not occur twice without an intervening non-recording bit, and by the system including converting means operable to convert the recording waveform before the recording means records the recording code by extending the duration of each of the recording pulses such that the extended length of each of the recording pulses is${\text{T}}_{\text{1}} \text{= (} \text{d} \text{+1)} \text{x} \frac{\text{T}}{\text{2}}$

## Patentansprüche

1. Digitaldaten-Aufzeichnungsverfahren mit den Schritten:
Kodieren digitaler Daten als Aufzeichnungscode mit Aufzeichnungsbits und Nicht-Aufzeichnungsbits, so daß die minimale Lauflänge der Nicht-Aufzeichnungsbits auf eine vorbestimmte Anzahl von Bits d begrenzt ist,
Erzeugen eines Aufzeichnungssignalverlauts, bei dem jedes Aufzeichnungsbit durch einen Aufzeichnungsimpuls der Länge T und jedes Nicht-Aufzeichnungsbit durch einen Nicht-Aufzeichnungsimpuls der Länge T dargestellt wird, und
Aufzeichnen des Aufzeichnungscodes auf einem Aufzeichnungsträger gemäß dem Aufzeichnungssignalverlauf, so daß Aufzeichnungsbits durch Markierungen und Nicht-Aufzeichnungsbits durch Zwischenräume zwischen Markierungen dargestellt werden,
**dadurch gekennzeichnet, daß**
die digitalen Daten derart kodiert werden, daß Aufzeichnungsbits nicht zweimal ohne ein dazwischenliegendes Nicht-Aufzeichnungsbit auftreten, und das Verfahren den weiteren Schritt
Umwandeln des Aufzeichnungssignalverlaufs vor dem Aufzeichnungsschritt durch Verlängerung der Dauer jedes Aufzeichnungsimpulses derart, daß die verlängerte Länge jedes Aufzeichnungsimpulses${\text{T}}_{\text{1}} \text{= (} \text{d} \text{+1) .} \frac{\text{T}}{\text{2}}$ beträgt, aufweist.

2. Verfahren nach Anspruch 1, **dadurch gekennzeichnet, daß** das Kodiersystem ein Lauflängen-begrenztes Kodiersystem ist.

3. Verfahren nach Anspruch 2, **dadurch gekennzeichnet, daß** in dem Aufzeichnungsschritt die Lauflängen-begrenzten kodierten digitalen Daten gemäß einer NRZ- (Wechselschrift)Vorschrift aufgezeichnet werden.

4. Verfahren nach einem der Ansprüche 1 bis 3, **dadurch gekennzeichnet, daß**
in dem Aufzeichnungsschritt die digitalen Daten durch Ausstrahlen von Licht auf den Aufzeichnungsträger aufgezeichnet werden.

5. Verfahren nach Anspruch 4, **dadurch gekennzeichnet, daß** in dem Aufzeichnungsschritt das Licht durch Impulse der Anzahl der Codes "1" ausgestrahlt wird.

6. Digitaldaten-Aufzeichnungssystem mit
einer Kodiereinrichtung zur Kodierung digitaler Daten als Aufzeichnungscode mit Aufzeichnungsbits und Nicht-Aufzeichnungsbits, so daß die minimale Lautlänge der Nicht-Aufzeichnungsbits auf eine vorbestimmte Anzahl von Bits d begrenzt ist,
einer Erzeugungseinrichtung zur Erzeugung eines Aufzeichnungssignalverlaufs, bei dem jedes Aufzeichnungsbit durch einen Aufzeichnungsimpuls der Länge T und jedes Nicht-Aufzeichnungsbit durch einen Nicht-Aufzeichnungsimpuls der Länge T dargestellt wird, und
einer Aufzeichnungseinrichtung zur Aufzeichnung des Aufzeichnungscodes auf einem Aufzeichnungsträger gemäß dem Aufzeichnungssignalverlauf, so daß Aufzeichnungsbits durch Markierungen und Nicht-Aufzeichnungsbits durch Zwischenräume zwischen Markierungen dargestellt werden,
**dadurch gekennzeichnet, daß**
die Kodiereinrichtung die digitalen Daten derart kodiert, daß Aufzeichnungsbits nicht zweimal ohne ein dazwischenliegendes Nicht-Aufzeichnungsbit auftreten, und das System ferner
eine Umwandlungseinrichtung zur Umwandlung des Aufzeichnungssignalverlaufs vor der Aufzeichnung des Aufzeichnungscodes durch die Aufzeichnungseinrichtung durch Verlängerung der Dauer jedes Aufzeichnungsimpulses derart, daß die verlängerte Länge jedes Aufzeichnungsimpulses${\text{T}}_{\text{1}} \text{= (} \text{d} \text{+1) .} \frac{\text{T}}{\text{2}}$ beträgt, aufweist.

## Revendications

1. Procédé d'enregistrement de données numériques comprenant les étapes dans lesquelles :
on code des données numériques en tant que code d'enregistrement comprenant des bits d'enregistrement et des bits de non-enregistrement de manière que la longueur minimale du trajet des bits de non-enregistrement soit limitée à un nombre prédéterminé de bits d ;
on génère une forme d'onde d'enregistrement dans laquelle chacun des bits d'enregistrement est représenté par une impulsion d'enregistrement de longueur T et chaque bit de non-enregistrement est représenté par une impulsion de non-enregistrement de longueur T ; et
on enregistre le code d'enregistrement sur un support d'enregistrement en fonction de la forme d'onde d'enregistrement afin que des bits d'enregistrement soient représentés par des marques et que des bits de non-enregistrement soient représentés par des espaces entre des marques ;
caractérisé en ce que les données numériques sont codées de façon que les bits d'enregistrement n'apparaissent pas deux fois sans un bit intermédiaire de non-enregistrement, et le procédé comprenant en outre l'étape de conversion de la forme d'onde d'enregistrement avant l'étape d'enregistrement en prolongeant la durée de chacune des impulsions d'enregistrement afin que la longueur prolongée de chacune des impulsions d'enregistrement soit${\text{T}}_{\text{1}} \text{= (} \text{d} \text{+1)} \text{x} \frac{\text{T}}{\text{2}}$

2. Procédé selon la revendication 1, caractérisé en ce que ledit système de codage est un système de codage à longueur de trajet limitée.

3. Procédé selon la revendication 2, caractérisé en ce que, dans ladite étape d'enregistrement, les données numériques codées en longueur de trajet limité sont enregistrées conformément à une règle NRZ (non retour à zéro).

4. Procédé selon l'une quelconque des revendications 1-3, caractérisé en ce que, ladite étape d'enregistrement, lesdites données numériques sont enregistrées par projection d'une lumière sur ledit support d'enregistrement.

5. Procédé selon la revendication 4, caractérisé en ce que, dans ladite étape d'enregistrement, la lumière est projetée par des impulsions du nombre desdits codes "1".

6. Système d'enregistrement de données numériques comportant :
des moyens de codage pouvant être mis en oeuvre pour coder des données numériques sous la forme d'un code d'enregistrement comprenant des bits d'enregistrement et des bits de non-enregistrement de façon que la longueur de trajet minimale des bits de non-enregistrement soit limitée à un nombre prédéterminé de bits d ;
des moyens de génération pouvant être mis en oeuvre pour générer une forme d'onde d'enregistrement dans laquelle chacun des bits d'enregistrement est représenté par une impulsion d'enregistrement de longueur T et chaque bit de non-enregistrement est représenté par une impulsion de non-enregistrement de longueur T ; et
des moyens d'enregistrement pouvant être mis en oeuvre pour enregistrer le code d'enregistrement sur un support d'enregistrement conformément à la forme d'onde d'enregistrement afin que les bits d'enregistrement soient représentés par des marques et que les bits de non-enregistrement soient représentés par des espaces entre les marques ;
caractérisé en ce que les moyens de codage codent les données numériques de façon que les bits d'enregistrement n'apparaissent pas deux fois sans bit intermédiaire de non-enregistrement, et le système comprenant des moyens de conversion pouvant être mis en oeuvre pour convertir la forme d'onde d'enregistrement avant que les moyens d'enregistrement enregistrent le code d'enregistrement en prolongeant la durée de chacune des impulsions d'enregistrement afin que la longueur prolongée de chacune des impulsions d'enregistrement soit${\text{T}}_{\text{1}} \text{= (} \text{d} \text{+1)} \text{x} \frac{\text{T}}{\text{2}}$
